(19) Europäisches Patentamt
European Patent Office
Office européen des brevets

(11) Veröffentlichungsnummer: **0 303 982**
**A2**

(12) # EUROPÄISCHE PATENTANMELDUNG

(21) Anmeldenummer: **88113123.9**

(51) Int. Cl.[4]: **A01N 47/36**

(22) Anmeldetag: **12.08.88**

Patentansprüche für folgenden Vertragsstaat: ES.

(30) Priorität: **19.08.87 DE 3727629**

(43) Veröffentlichungstag der Anmeldung:
**22.02.89 Patentblatt 89/08**

(84) Benannte Vertragsstaaten:
**AT BE CH DE ES FR GB IT LI NL**

(71) Anmelder: **HOECHST AKTIENGESELLSCHAFT**
**Postfach 80 03 20**
**D-6230 Frankfurt am Main 80(DE)**

(72) Erfinder: **Willms, Lothar, Dr.**
**Schulstrasse 3**
**D-5411 Hillscheid(DE)**
Erfinder: **Mildenberger, Hilmar, Dr.**
**Fasanenstrasse 24**
**D-6233 Kelkheim (Taunus)(DE)**
Erfinder: **Günther, Dieter, Dr.**
**Nachtigallenweg 1A**
**D-6233 Kelkheim (Taunus)(DE)**
Erfinder: **Hacker, Erwin, Dr.**
**Margarethenstrasse 16**
**D-6203 Hochheim am Main(DE)**
Erfinder: **Schaub, Rüdiger, Dr.**
**Rosbacher Strasse 12**
**D-6365 Rosbach(DE)**
Erfinder: **Bürstell, Helmut, Dr.**
**Am Hohlacker 65**
**D-6000 Frankfurt am Main 50(DE)**

(54) **Verwendung von Sulfonylharnstoffen als Gametozide.**

(57) Gegenstand der Erfindung ist die Verwendung einer Verbindung der Formel I oder deren Salz,

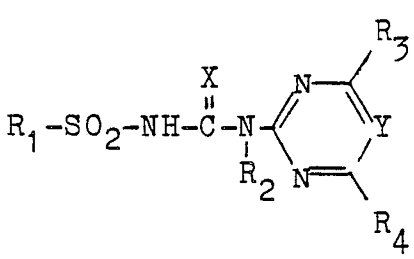

(I)

worin
$R_1$ einen (halogenierten) aliphatischen oder cycloaliphatischen Rest; $R_2$ = H, Alkyl, Alkenyl oder Alkoxy; $R_3$, $R_4$ jeweils H, (subst.) Alkyl, (subst.) Alkoxy, $NO_2$, CN, (subst.) Amino, (subst.) Alkenyl oder Alkinyl; X = O oder S und Y = CH oder N bedeuten, als Gametozid. Mit Hilfe der Verbindungen der Formel I oder deren Salzen kann daher auf einfache Weise Hybrid-Saatgut erzeugt werden.

EP 0 303 982 A2

## Verwendung von Sulfonylharnstoffen als Gametozide

Gegenstand der Erfindung ist die Verwendung von heterocyclischen Sulfonylharnstoffen der nachfolgenden Formel I als Gametozide.

Die Verbindungen der Formel I sowie deren Verwendung als Wuchshemmer für Kulturpflanzen ist aus EP-A 061661 und EP-A 071958 bekannt. Es wurde nun überraschenderweise gefunden, daß diese Verbindungen eine selektive männliche Sterilität bei Pflanzen bewirken.

Gegenstand der Erfindung ist daher ein Verfahren zur Sterilisation der männlichen Teile einer Pflanze, dadurch gekennzeichnet, daß man eine Verbindung der Formel I oder ihr Salz

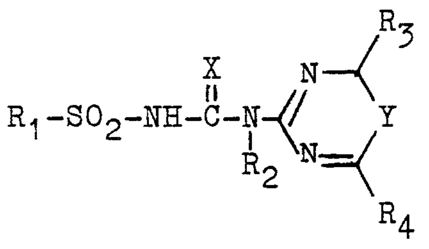

(I)

worin

$R_1$ einen jeweils gegebenfalls halogenierten gesättigten oder ungesättigten, aliphatischen oder cycloaliphatischen Rest mit bis zu 8 C-Atomen,

$R_2$ Wasserstoff, $(C_1$-$C_6)$Alkyl, $(C_2$-$C_4)$-Alkenyl oder $(C_1$-$C_5)$-Alkoxy,

$R_3$, $R_4$ unabhängig voneinander Wasserstoff, $(C_1$-$C_4)$-Alkyl, $(C_1$-$C_4)$-Alkoxy, Halogen, $NO_2$, CN, $-CH_2O$-$(C_1$-$C_4)$-Alkyl, $-CH[O(C_1$-$C_4)$-alkyl$]_2$, $(C_1$-$C_4)$-Halogenalkyl, $(C_1$-$C_4)$-Halogenalkoxy, Amino, $(C_1$-$C_4)$-Alkylamino, Di$(C_1$-$C_4$-alkyl)amino, $-CH_2S(C_1$-$C_4$-alkyl), $-CH_2COO(C_1$-$C_4$-Alkyl), $(C_2$-$C_4)$-Alkenyl, $(C_2$-$C_4)$-Alkinyl, $(C_2$-$C_4)$-Halogenalkenyl,

X O oder S und

Y CH oder N

bedeuten, auf die Pflanze oder deren Standort appliziert.

Unter "aliphatischen Resten" in $R_1$-Stellung sind Alkylreste, Alkenylreste mit einfacher oder konjugierter Doppelbindung oder Alkinylreste zu verstehen. Als halogenierte aliphatische Reste für $R_1$ kommen insbesondere geradkettige oder verzweigte $(C_1$-$C_5)$-Mono- oder Dihalogenalkyl-Reste in Betracht, beispielsweise die Reste $-CH_2CH_2Cl$, $-CH_2$-$CHCl$-$CH_3$, $-CHCl$-$CHCl$-$CH_3$, $-CH(CH_3)$-$CHCl$-$CH_3$, insbesondere $-CH(CH_3)$-$CHCl$-$CH_3$.

"Halogen" bedeutet bevorzugt Fluor, Chlor oder Brom.

Als Halogenalkyl- oder Halogenalkoxyreste für $R_3$, $R_4$ sind insbesondere zu nennen die Reste Chlormethyl und Difluormethoxy.

Cycloaliphatische Reste sind beispielsweise Cycloalkyl-, Cycloalkenyl- oder Cycloalkadienylreste, insbesondere mit 5 - 6 C-Atomen.

Verbindungen der Formel I mit $R_1$ = $(C_1$-$C_5)$Mono- oder Dihalogen-alkyl, insbesondere Monohalogenobutyl; $R_2$ = H; $R_3$, $R_4$ = $(C_1$-$C_4)$-Alkyl oder $(C_1$-$C_4)$Alkoxy, insbesondere Methyl oder Methoxy; X = O und Y = N finden bevorzugt Anwendung.

Sulfonylharnstoffe der allgemeinen Formel I, welche im aliphatischen Rest $R_1$ eines oder mehrere asymmetrische Kohlenstoffatome enthalten, liegen in enantiomeren oder diastereomeren Formel vor. Ferner können Sulfonylharnstoffe der allgemeinen Formel I, welche im aliphatischen Rest $R_1$ eine oder mehrere Doppelbindungen enthalten, bei entsprechender olefinischer Substitution als E- oder als Z-Isomere vorkommen. Im allgemeinen werden die Verbindungen als Isomerengemische angewendet. Es können aber auch die reinen Isomeren eingesetzt werden. Diese können mit den üblichen Techniken durch Trennung der Isomerengemische erhalten werden.

Ebenso können die Verbindungen der Formel I in Form ihrer Salze angewendet werden. Die Salzbildung erfolgt bei den Sulfonylharnstoffen an der Sulfonylamino-Gruppe $-SO_2$-$NH$-. Es können die in der Landwirtschaft üblichen Salze verwendet werden, beispielsweise die Alkali-, Erdalkali-, Ammonium- oder substituierten Ammoniumsalze.

Typische Beispiele für die Verbindungen der Formel I sind in der folgenden Tabelle 1 zusammengestellt:

**Tabelle 1**

| Bsp. Nr. | $R_1$ | X | $R_2$ | Y | $R_3$ | $R_4$ |
|---|---|---|---|---|---|---|
| 1 | $ClCH_2CH_2-$ | O | H | N | $OCH_3$ | $CH_3$ |
| 2 | $CH_2=CH-$ | O | H | N | $OCH_3$ | $CH_3$ |
| 3 | $Cl_2CH-CH_2-$ | O | H | N | $OCH_3$ | $CH_3$ |
| 4 | $CH_3CH_2CH_2-$ | O | H | N | $OCH_3$ | $OCH_3$ |
| 5 | $CH_3CH(Cl)CH_2-$ | O | H | N | $OCH_3$ | $CH_3$ |
| 6 | $CH_3CH(Cl)CH_2-$ | O | H | CH | $OCH_3$ | $OCH_3$ |
| 7 | $CH_3CH=CH-$ | O | H | CH | $OCH_3$ | Cl |

| Bsp. Nr. | $R_1$ | X | $R_2$ | Y | $R_3$ | $R_4$ |
|---|---|---|---|---|---|---|
| 8 | $CH_3CH=CH-$ | O | H | CH | $SCH_3$ | $CH_3$ |
| 9 | $CH_3CH=CH-$ | S | $CH_3$ | CH | $CH_3$ | $CH_3$ |
| 10 | $CH_3CH=CH-$ | O | H | N | $OCH_3$ | $OCH_3$ |
| 11 | $CH_3CH=CH-$ | O | H | N | $OCH_3$ | $OCH_3$ |
| 12 | $CH_3CH-CH-$<br>Cl $CH_3$ | O | H | N | $OCH_3$ | $CH_3$ |
| 13 | $CH_3CH-CH-$<br>Cl $CH_3$ | O | H | N | $OCH_3$ | $OCH_3$ |
| 14 | $CH_3CH-CH-$<br>Cl $CH_3$ | O | H | CH | $OCH_3$ | $OCH_3$ |
| 15 | $CH_3CH-CH-$<br>Cl $CH_3$ | O | H | CH | $OCH_3$ | $CH_3$ |
| 16 | $CH_3CH_2CHCH_2-$<br>Cl | O | H | N | $OCH_3$ | $CH_3$ |
| 17 | 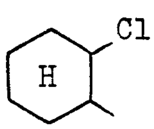 | O | H | N | $OCH_3$ | $CH_3$ |
| 18 | 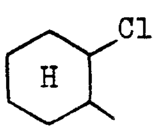 | O | H | N | $OCH_3$ | $CH_3$ |
| 19 | 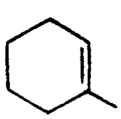 | O | H | N | $OCH_3$ | $CH_3$ |

| Bsp. Nr. | $R_1$ | X | $R_2$ | Y | $R_3$ | $R_4$ |
|---|---|---|---|---|---|---|
| 20 | 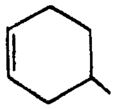 | O | H | N | $OCH_3$ | $CH_3$ |
| 21 | 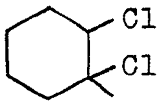 | O | H | N | $OCH_3$ | $OCH_3$ |
| 22 | 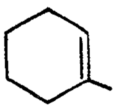 | O | H | CH | $OCH_3$ | $OCH_3$ |
| 23 | $CH_3CH-CH-$<br>Cl Cl | O | H | N | $CH_3$ | $OCH_3$ |
| 24 | $CH_3-CH-CH-$<br>Br Br | O | H | N | $OCH_3$ | $OCH_3$ |
| 25 | $CH_3CH=C-$<br>Cl | O | H | N | $OCH_3$ | $CH_3$ |
| 26 | $CH_3CH=C-$<br>Br | O | H | N | $OCH_3$ | $CH_3$ |
| 27 | $CH_3-CH=C-$<br>$CH_3$ | O | H | N | $OCH_3$ | $CH_3$ |
| 28 | $CH_3-CH=C-$<br>$CH_3$ | O | H | CH | $OCH_3$ | $CH_3$ |
| 29 | $CH_3-CH=C-$<br>$CH_3$ | O | H | CH | $OCH_3$ | $OCH_3$ |
| 30 | $CH_3-CH=C-$<br>$CH_3$ | O | H | CH | $CH_3$ | $CH_3$ |

sowie die weitgehend reinen Stereoisomeren dieser verbindungen.

Die Verbindungen der Formel I zeigen eine gametozide Wirkung bei verschiedenen Kulturpflanzen,

insbesondere bei der Anwendung an monokotylen Pflanzen, wie z. B. Weizen, Gerste, Roggen, Mais, Reis, Hafer, Sorghum und Futtergräsern. Darüber hinaus kann eine gametozide Wirkung auch nach Anwendung an Dikotyledonen, wie z. B. Sonnenblumen, Baumwolle, Raps, Zuckerrüben beobachtet werden. Bei der Verwendung als Gametozid induzieren die Verbindungen der Formel I eine männliche Sterilität der Pflanze, ohne die Fruchtbarkeit der weiblichen Blütenteile nachteilig zu beinflussen oder zu einer signifikanten Wachstumshemmung der behandelten Pflanzen zu führen.

Die männliche Sterilität kommt zum Ausdruck entweder als aktuelle männliche Sterilität, die sich durch Fehlen von männlichen Blütenteilen oder in sterilen Pollen äußert, oder durch funktionelle männliche Sterilität, bei der die männlichen Blütenteile zwar gebildet sind, aber nicht in der Lage sind, eine Befruchtung durchzuführen. Eine funktionelle männliche Sterilität kann auch dadurch verursacht werden, daß nach Anwendung der Verbindungen der Formel I das Heranwachsen der männlichen Blütenteile gegenüber befruchtungsfähigen weiblichen Blütenteilen zeitlich verzögert wird, was eine Fremdbestäubung mit ausgewählten Blütenpollen ermöglicht (künstl. Protogynie).

Die gametoziden Effekte der Verbindungen der Formel I lassen sich besonders vorteilhaft bei der Züchtung und Feldproduktion von Hybrid-Saatgut nutzen, wobei der besondere Nutzen darin liegt, daß im Gegensatz zu den bisherigen Hybridisierungsmethoden eine Kreuzung beliebiger Linien miteinander möglich wird. Gegenstand der Erfindung ist daher auch ein Verfahren zur Gewinnung von Hybrid-Samen durch Kreuzung einer weiblichen Pflanze, die zuvor durch Anwendung der Verbindungen der Formel I oder ihrer Salze männlich sterilisiert wurde, mit einer beliebigen Vaterlinie einer genetisch identischen oder ähnlichen Pflanze.

Bei der Hybridisierung kreuzt der Züchter zwei oder mehrere sorgfältig ausgewählte Inzuchtlinien in einem experimentell ermittelten Schema und erhält auf diese Weise Hybridsaatgut, dessen Pflanzen gesteigerte Wüchsigkeit und Leistung gegenüber dem besten Elternteil aufweisen.

Hybrid-Saatgut spielt bei den Hauptnahrungsnutzpflanzen und Zierpflanzen eine bedeutende und weiter zunehmende Rolle, da die Hybriden in der Regel vitaler als reine Arten sind und höhere Erträge als der ertragsreichste Elter liefern. Bei der Züchtung und Feldproduktion von Hybriden gab es bisher im wesentlichen zwei Verfahren:
Eine mechanische Sterilisierung durch Entfernen der Antheren und der Einsatz von cytoplasmatisch sterilen Mutterlinien.

Beide Verfahren sind gegenüber der Hybridisierung nach Gametozideinsatz mit erheblichen Nachteilen verbunden. Eine mechanische Sterilisierung ist mit wirtschaftlich vertretbarem Aufwand überhaupt nur bei bei wenigen Pflanzen wie z. B. dem einhäusigen und synözischen Mais durchführbar und führt darüber hinaus häufig zu unerwünschten Verletzungen der Pflanze, die zu Ertragsdepressionen oder zu Totalausfall der Pflanzen führen können. Besonders schwierig ist eine männliche Sterilisierung bei kleinkörnigen Halmfrüchten, die Zwitterblüten aufweisen und sich normalerweise selbst befruchten. Zur Erzeugung von Hybridsaatgut bei solchen Pflanzen muß die Selbstbestäubung in der Mutterlinie vollkommen unterbunden werden, was nur erreicht werden kann, wenn jede Blüte rechtzeitig (oft vor dem Ährenschieben) von Hand geöffnet wird und alle Staubbeutel entfernt werden. Dieses Verfahren ist in der Praxis sehr zeitaufwendig, arbeitsintensiv und ist im großen Umfang überhaupt nicht durchführbar.

Bei einigen Pflanzen ist es gelungen, Hybride aus cytoplasmatisch sterilen Pflanzen als Mutterlinie und einer entsprechenden Vaterlinie zu erzeugen.

Die Hauptnachteile dieser Methode sind, daß man Kreuzungen nur mit begrenztem genetischen Material durchführen kann, und daß alle cytoplasmatiscch vererbte Schwächen, wie z. B. fehlende Krankheitsresistenz, von der Mutterlinie auf alle erzeugten Hybriden übertragen werden.

Außerdem ist zur Weiderherstellung von bestäubungsfähigen Nachfolgegenerationen eine Rückkreuzung der männlich sterilen Hybriden mit Restorer-Linien notwendig, was im Rahmen eines Zuchtprogramms einen Zeitverlust von ca. einem Jahr darstellt.

Im Gegensatz zu den bisher gebräuchlichen Verfahren bietet der Einsatz von chemischen Sterilisierungsmitteln (Gametoziden) eine einfache, praktikable und wirtschaftliche Lösung zur Herstellung einer selektiven männlichen Sterilität bei Pflanzen.

Die Erzeugung von männlich sterilen Pflanzen mit Hilfe der Sulfonylharnstoffe der allgemeinen Formel I und die Gewinnung von Hybridsaatgut erfolgte nach folgender Methode:

Die jeweiligen Vater- und Mutterlinien, die miteinander gekreuzt werden sollen, werden nebeneinander in Streifen zwischen 0,5 und 10 m Breite gesät oder gepflanzt. Die Pflanzen der Mutterlinie (Samenträger) werden vor der Ausbildung der männlichen Blütenteile mit einem erfindungsgemäßen Wirkstoff behandelt, und man erhält eine männlich sterile, jedoch fruchtbare Elternpflanze. Die Vaterlinie (Pollenspender) wird dagegen nicht behandelt und dient zur Bestäubung der Mutterpflanzen. Die auf der Mutterpflanze erzeugten Samenkörner stellen das Hybridsaatgut dar. Die auf der Vaterlinie erzeugten Körner werden separat

geerntet und können zu anderen Zwecken genutzt werden.

Das beschriebene Verfahren zur Erzeugung von männlich sterilen Pflanzen und die Gewinnung von Hybridsaatgut mit Hilfe der erfindungsgemäßen Verbindungen ist Bestandteil der vorliegenden Erfindung.

Darüber hinaus ermöglichen die Wirkstoffe der Formel I eine gezielte Beeinflussung der Blüten- und Samenausbildung bei Pflanzen, insbesondere Gräsern. Auf diese Weise kann, z. B. in einem bestehenden Vegetationsbestand an Straßenböschungen, Wegrändern oder Obstanlagen, aber auch in intensiv geführten Beständen wie Zier- und Golfrasen eine unerwünschte Samenproduktion verhindert werden, die zum einen zu einem häufigen Mähen des Bestandes und zum anderen zu einer Artenverschiebung im Bestand führen kann. Durch Anwendung der erfindungsgemäßen Verbindungen kann somit ein gezieltes Vegetationsmanagement durchgeführt werden. Gegenstand der Erfindung ist daher auch ein Verfahren zur Steuerung der Blüten- oder Samenbildung bei Pflanzen, dadurch gekennzeichnet, daß man die Pflanzen oder deren Samen mit einer Verbindung der Formel I oder deren Salz behandelt.

Die Sulfonylharnstoffderivate der allgemeinen Formel I können pre- oder postemergent appliziert werden, wobei ein postemergenter Einsatz nach dem Auflaufen der Pflanzen bevorzugt wird.

Die Aufwandmengen richten sich nach dem gewünschten Effekt und sind abhängig vom Entwicklungsstadium der Pflanze und der Pflanzengattung. Daher sollte die Dosierung und der Applikationszeitpunkt jeweils experimentell bestimmt werden. Folgende Dosierungsbereiche in den verschiedenen Anwendungsbereichen haben sich ergeben:

Zur Erzielung eines gametoziden Effekts und Erzeugung von Hybridsaatgut liegen die Aufwandmengen pro Applikation zwischen 0, 1 und 2 kg Wirkstoff pro ha. Der günstigste Anwendungszeitpunkt liegt nach dem Auflaufen, jedoch vor Sichtbarwerden der Ähren und Antheren oder zu Beginnn der Blütenbildung. Im Getreide konnte die beste gametozide Wirkung nach Behandlung ab dem 5.-Blattstadium bis zum 4.-Knotenstadium erreicht werden.

Zur Unterdrückung der Ausbildung von Samenträgern z. B. an Gräsern hat sich eine Anwendung von 0,1 bis 1,5 kg Wirkstoff pro ha vor Schoßbeginn als vorteilhaft erwiesen.

Gegenstand der Erfindung sind auch gametozide Mittel zur Anwendung in einem der beschriebenen Verfahren, die gekennzeichnet sind durch einen Gehalt an einer Verbindung der Formel I in Kombination mit üblichen Formulierungshilfsmitteln und Inertstoffen.

Die erfindungsgemäßen Mittel enthalten die Wirkstoffe der Formel I im allgemeinen zu 2 - 95 Gew.-%.

Sie können als Spritzpulver, emulgierbare Konzentrate, versprühbare Lösungen, Stäubemittel oder Granulate in den üblichen Zubereitungen angewendet werden.

Spritzpulver sind im Wasser gleichmäßig dispergierbare Präparate, die neben dem Wirkstoff außer einem Verdünnungsmittel oder Inertstoff noch Netzmittel, z. B. polyoxyethylierte Alkylphenole, polyoxyethylierte Fettalkohole, Alkyl- oder Alkylphenylsulfonate und Dispergiermittel, z. B. ligninsulfonsaures Natrium, 2,2′-dinaphthylmethan-6,6′-disulfonsaures Natrium, dibutylnaphthalinsulfonsaures Natrium oder auch oleylmethyltaurinsaures Natrium enthalten.

Emulgierbare Konzentrate werden durch Auflösen des Wirkstoffes in einem organischen Lösungsmittel, z. B. Butanol, Cyclohexanon, Dimethylformamid, Xylol oder auch höhersiedenden Aromaten oder Kohlenwasserstoffen unter Zusatz von einem oder mehreren Emulgatoren hergestellt. Als Emulgatoren können beispielsweise angewendet werden: Alkylarylsulfonsaure Kalziumsalze wie Ca-dodecylbenzosulfonat oder nichtionische Emulgatoren wie Fettsäurepolyglykolester, Alkylarylpolyglykolether, Fettalkoholpolyglykolether, Propylenoxid-Ethylenoxid-Kondensationsprodukte, Fettalkohol-Propylenoxid-Ethylenoxid-Kondensationsprodukte, Alkylpolyether, Sorbitanfettsäureester, Polyoxyethylensorbitfett-säureester oder Polyethylen-sorbitester.

Stäubemittel erhält man durch Vermahlen des Wirkstoffes mit fein verteilten, festen Stoffen, z. B. Talkum, natürlichen Tonen wie Kaolin, Bentonit, Pyrophillit oder Diatomeenerde.

Granulate können entweder durch Verdüsen des Wirkstoffes auf adsorptionsfähiges, granuliertes Inertmaterial hergestellt werden oder durch Aufbringen von Wirkstoffkonzentraten mittels Klebemitteln, z. B. Polyvinylalkohol, polyacrylsaurem Natrium oder auch Mineralölen auf die Oberfläche von Trägerstoffen wie Sand, Kaolinite oder von granuliertem Inertmaterial. Auch können geeignete Wirkstoffe in der für die Herstellung von Düngemittelgranalien üblichen Weise - gewünschtenfalls in Mischung mit Düngemitteln - hergestellt werden.

Bei gametoziden Mitteln können die Konzentrationen der Wirkstoffe in den handelsüblichen Formulierungen verschieden sein.

In Spritzpulvern variiert die Wirkstoffkonzentrationen z. B. zwischen etwa 10 % und 80%, der Rest besteht aus den oben angegebenen Formulierungszusätzen. Bei emulgierbaren Konzentraten kann die Wirkstoffkonzentration gleichfalls etwa 10 % bis 80 % betragen. Staubförmige Formulierungen enthalten etwa 2 - 20 %. Bei Granulaten hängt der Wirkstoffgehalt zum Teil davon ab, ob die wirksame Verbindung

flüssig oder fest vorliegt und welche Granulierhilfsmittel, Füllstoffe usw. verwendet werden.

Zur Anwendung als Gametozide werden die handelsüblichen Konzentrate gegebenenfalls in üblicher Weise verdünnt, z. B. bei Spritzpulvern und emulgierbaren Konzentraten mittels Wasser. Staubförmige und granulierte Zubereitungen sowie versprühbare Lösungen werden vor der Anwendung nicht mehr mit weiteren inerten Stoffen verdünnt.

**Biologische Beispiele**

**Beispiel I: Gametozide Wirkung bei Getreide**

a) Induktion der männlichen Sterilität

Die Weizenpflanzen werden zu Schoßbeginn (Stadium 30-34) mit einer wäßrigen Formulierung des Wirkstoffes (hergestellt aus einem Spritzpulver) bei einer Konzentration von 0,1 bis 2 kg Aktivsubstanz in 600 l Wasser pro ha gleichmäßig besprüht.
Während des Ährenschiebens jedoch vor dem Erscheinen der Antheren werden einzelne Ähren zur Verhinderung der Fremdbestäubung eingetütet. Die Bewertung der gametoziden Wirkung erfolgt zum Erntezeitpunkt durch Auszählen der gebildeten Körner pro Ähre von behandelten und unbehandelten Weizenpflanzen.

b) Überprüfung der Fruchtbarkeit und Erzeugung von Hybridsaatgut

Eine Gruppe von Weizenpflanzen wird wie unter a) behandelt und mit Blütenpollen einer anderen Weizensorte fremdbestäubt. Die Bewertung der Befruchtungsfähigkeit erfolgt zum Erntezeitpunkt durch Auszählen der gebildeten Hybrid-Körner pro Ähre im Vergleich zu Ähren von unbehandelten Pflanzen.

Die Sulfonylharnstoffderivate der Formel I zeigen bei 2 kg AS/ha in den Versuchen eine sehr gute gametozide Wirkung und reduzieren die Bildung von Körnern pro Ähre im Test a) um 70 bis 100 % gegenüber der unbehandelten Kontrolle. Die Verbindungen 1, 5, 10, 12 und 23 aus Tabelle 1 führen sogar schon nach Anwendung von 0,5 kg AS/ha zu einer Körnerreduktion von 100 %.

Die mit den Verbindungen 1, 5, 10, 12 und 23 aus Tabelle 1 (s. S. 3) behandelten Pflanzen entwickeln sich im Test b) nach Fremdbestäubung wie unbehandelte Pflanzen, wobei der Kornansatz bei den Hybridkörnern lediglich zwischen 0 und 10 % im Vergleich zu dem Kornansatz bei unbehandelten Pflanzen reduziert wird. Da die genannten Verbindungen eine sehr gute gametozide Wirkung haben und gleichzeitig die Fruchtbarkeit der Pflanzen nicht negativ beinflussen, eignen sie sich hervorragend für die Erzeugung von Hybridsaatgut.

In Gerste und Roggen sind bei analogen Versuchen vergleichbare Ergebnisse wie beim Weizen feststellbar.

**Beispiel II: Gametozide Wirkung bei Sonnenblumen**

a) Induktion der männlichen Sterilität

Etwa 3 Wochen vor Blühbeginn (beginnendes Knospenstadium) werden die Sonnenblumenpflanzen mit einer aus Spritzpulver des Wirkstoffes hergestellten Spritzbrühe, die 2000 ppm Aktivsubstanz enthält, gleichmäßig besprüht. Direkt vor Blühbeginn werden die Blütenstände durch Eintüten vor Fremdbestäubung geschützt. Die Auswertung der gametoziden Wirkung erfolgt durch Auszählen der gebildeten vollen Körner in den Körben der behandelten Pflanzen im Vergleich zu den unbehandelten eingetüteten Pflanzen.

b) Überprüfung der Fruchtbarkeit und Erzeugung von Hybridsaatgut

Sonnenblumenpflanzen werden wie unter a) behandelt und anschließend, vor Blühbeginn, wird der Blütenstand durch Eintüten isoliert.

Nach dem Öffnen der Blüten wird in zweitägigem Abstand eine Fremdbestäubung mit Blütenpollen einer anderen, ausgewählten Sonnenblumensorte durchgeführt. Die Fremdbestäubung erfolgt durch Aufbringen von intakten Blütenpollen auf die jeweils befruchtungsfähigen Blüten mittels eines Pinsels. Die Beurteilung der Fruchtbarkeit erfolgt zur Ernte durch Auszählen der gebildeten Hybrid-Körner von behandelten Pflanzen im Vergleich zu unbehandelten Pflanzen.

Die Sulfonylharnstoffderivate der Formel I zeigen in den Versuchen eine gametozide Wirkung, die zwischen 75 und 100 % liegt. Die Verbindungen 1, 5, 10, 12 und 23 aus Tabelle 1 führten zu einer 100 %igen männlichen Sterilität, ohne negative Beeinflussung der Fruchtbarkeit, was einen Kornansatz an Hybridkörnern von 85 bis 100 % im Vergleich zur unbehandelten Kontrolle ergibt.

**Beispiel III: Unterdrückung der Blüten- und Samenausbildung bei Gräsern**

Auf verschiedene Gräser und Grasmischungen werden vor Schoßbeginn Sulfonylharnstoffe der Formel I in Dosierungen zwischen 0,1 und 1,5 kg Wirkstoff pro ha ausgebracht. Die Ausbildung von Samenträgern wird 12 Wochen nach Applikation bestimmt. Dabei reduzieren in Abhängigkeit von der Aufwandmenge die verschiedenen Verbindungen, insbesondere die Verbindungen 1, 5, 10, 12 und 23 aus Tabelle 1, die Ausbildung von sichtbaren Samenträgern zwischen 70 und 100 %. Eine Veränderung der Farbe oder andere Phytotoxerscheinungen wurden nicht festgestellt.

## Ansprüche

1. Verfahren zur Erzeugung einer männlichen Sterilität einer Pflanze, dadurch gekennzeichnet, daß man eine wirksame Menge einer Verbindung der Formel I oder ihr Salz

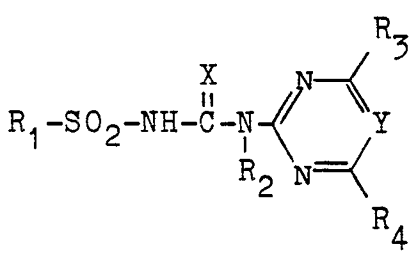

(I)

worin

$R_1$ einen jeweils gegebenenfalls halogenierten gesättigten oder ungesättigten, aliphatischen oder cycloaliphatischen Rest mit bis zu 8 C-Atomen,
$R_2$ Wasserstoff, $(C_1$-$C_6)$-Alkyl, $(C_2$-$C_4)$-Alkenyl oder $(C_1$-$C_5)$-Alkoxy,
$R_3$, $R_4$ unabhängig voneinander Wasserstoff, $(C_1$-$C_4)$-Alkyl, $(C_1$-$C_4)$-Alkoxy, Halogen, $NO_2$, CN, $-CH_2O-(C_1$-$C_4)$-Alkyl, $-CH[O(C_1$-$C_4)$-Alkyl$]_2$, $(C_1$-$C_4)$-Halogenalkyl, $(C_1$-$C_4)$-Halogenalkoxy, Amino, $(C_1$-$C_4)$-Alkylamino, Di$(C_1$-$C_4$alkyl) amino, $-CH_2S(C_1$-$C_4$-Alkyl), $-CH_2COO(C_1$-$C_4$-Alkyl), $(C_2$-$C_4)$-Alkenyl, $(C_2$-$C_4)$-Alkinyl, $(C_2$-$C_4)$-Halogenalkenyl,
X O oder S und
Y CH oder N

bedeuten, auf die Pflanze oder deren Standort appliziert.

2. Verfahren nach Anspruch 1, dadurch gekennzeichnet, daß $R_1 = (C_1$-$C_5)$Mono- oder Dihalogen-alkyl; $R_2$ = H; $R_3$, $R_4$ = unabhängig voneinander $(C_1$-$C_4)$Alkyl oder $(C_1$-$C_4)$Alkoxy; X = O und Y = N bedeuten.

3. Verfahren nach Ansprüchen 1 oder 2, dadurch gekennzeichnet, daß man eine Verbindung der Formel I oder ihr Salz zu Beginn der Blütenbildung, aber vor der Ausbildung der männlichen Blütenteile appliziert.

4. Verfahren zur Gewinnung von Hybrid-Samen, dadurch gekennzeichnet, daß man eine weibliche Pflanze, die mit einer Verbindung der Formel I oder deren Salz von Anspruch 1 oder 2 behandelt wurde, mit Pollen einer genetisch identischen oder ähnlichen Pflanze bestäubt und den Hybridsamen erntet.

5. Verfahren nach einem der Ansprüche 1 bis 4, dadurch gekennzeichnet, daß man die Pflanze mit einer Menge von 0,1 bis 2 kg Wirkstoff der Formel I oder dessen Salz pro ha behandelt.

6. Verfahren zur Steuerung der Blüten- oder Samenbildung bei Pflanzen, dadurch gekennzeichnet, daß man die Pflanzen oder deren Samen mit einer Verbindung der Formel I oder deren Salz von Ansprüchen 1 oder 2 behandelt.

7. Mittel zur Anwendung in einem der Verfahren gemäß Ansprüchen 1 bis 6, dadurch gekennzeichnet, daß sie eine Verbindung der Formel I oder deren Salz und einen Trägerstoff enthalten.

Patentansprüche für folgenden Vertragsstaat : ES

1. Verfahren zur Erzeugung einer männlichen Sterilität einer Pflanze, dadurch gekennzeichnet, daß man eine wirksame Menge einer Verbindung der Formel I oder ihr Salz

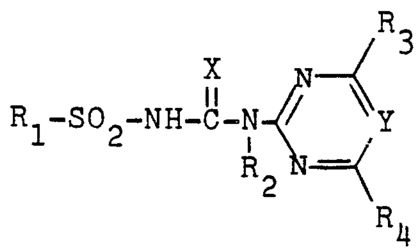 (I)

worin

$R_1$ einen jeweils gegebenenfalls halogenierten gesättigten oder ungesättigten, aliphatischen oder cycloaliphatischen Rest mit bis zu 8 C-Atomen,
$R_2$ Wasserstoff, $(C_1-C_6)$-Alkyl, $(C_2-C_4)$-Alkenyl oder $(C_1-C_5)$-Alkoxy,

$R_3$, $R_4$ unabhängig voneinander Wasserstoff, $(C_1-C_4)$-Alkyl, $(C_1-C_4)$-Alkoxy, Halogen, $NO_2$, CN, $-CH_2O-(C_1-C_4)$-Alkyl, $-CH[O(C_1-C_4)\text{-Alkyl}]_2$, $(C_1-C_4)$-Halogenalkyl, $(C_1-C_4)$-Halogenalkoxy, Amino, $(C_1-C_4)$-Alkylamino, Di$(C_1-C_4$alkyl)amino, $-CH_2S(C_1-C_4$-Alkyl), $-CH_2COO(C_1-C_4$-Alkyl), $(C_2-C_4)$-Alkenyl, $(C_2-C_4)$-Alkinyl, $(C_2-C_4)$-Halogenalkenyl,
X O oder S und
Y CH oder N

bedeuten, auf die Pflanze oder deren Standort appliziert.

2. Verfahren nach Anspruch 1, dadurch gekennzeichnet, daß $R_1 = (C_1-C_5)$ Mono- oder Dihalogenalkyl; $R_2 = H$; $R_3$, $R_4$ = unabhängig voneinander $(C_1-C_4)$Alkyl oder $(C_1-C_4)$Alkoxy; X = O und Y = N bedeuten.

3. Verfahren nach Ansprüchen 1 oder 2, dadurch gekennzeichnet, daß man eine Verbindung der Formel I oder ihr Salz zu Beginn der Blütenbildung, aber vor der Ausbildung der männlichen Blütenteile appliziert.

4. Verfahren zur Gewinnung von Hybrid-Samen, dadurch gekennzeichnet, daß man eine weibliche Pflanze, die mit einer Verbindung der Formel I oder deren Salz von Anspruch 1 oder 2 behandelt wurde, mit Pollen einer genetisch identischen oder ähnlichen Pflanze bestäubt und den Hybridsamen erntet.

5. Verfahren nach einem der Ansprüche 1 bis 4, dadurch gekennzeichnet, daß man die Pflanze mit einer Menge von 0, 1 bis 2 kg Wirkstoff der Formel I oder dessen Salz pro ha behandelt.

6. Verfahren zur Steuerung der Blüten- oder Samenbildung bei Pflanzen, dadurch gekennzeichnet, daß man die Pflanzen oder deren Samen mit einer Verbindung der Formel I oder deren Salz von Ansprüchen 1 oder 2 behandelt.